# FASCICULE DE BREVET EUROPEEN

(11) **EP 2 606 399 B1**
(45) Date de publication et mention de la délivrance du brevet: **23.11.2016**
(21) Numéro de dépôt: 11758507.5
(22) Date de dépôt: 16.08.2011
(51) Int. Cl.: G02F 1/15

(54) **PROCÉDÉ DE FABRICATION D'UN ARTICLE ÉLECTROCHROME**
VERFAHREN ZUR HERSTELLUNG EINES ELEKTROCHROMEN ARTIKELS
PROCESS FOR MANUFACTURING AN ELECTROCHROMIC ARTICLE

(30) Priorité: 17.08.2010 FR 1056627
(43) Date de publication de la demande: 26.06.2013
(73) Titulaire: Essilor International (Compagnie Générale d'Optique), 94220 Charenton Le Pont (FR)
(72) Inventeur: BIVER, Claudine, 94220 Charenton-le-pont (FR); DULUARD, Sandrine, 94220 Charenton-le-pont (FR)
(74) Mandataire: Cabinet Plasseraud
(86) Numéro de dépôt international: PCT/FR2011/051917
(87) Numéro de publication internationale: WO 2012/022912

(56) Documents cités:
- WO-A2-2009/156692
- US-A- 4 938 571
- US-A1- 2010 165 440

## Description

La présente invention concerne un procédé de fabrication d'un article électrochrome, comprenant une étape de réduction ou d'oxydation non-électrolytique d'un revêtement électrochrome.

Les travaux ayant abouti à la présente demande ont reçu des fonds du Septième Programme-Cadre de la Commission Européenne sous la Convention de subvention n° INNOSHADE-200431-NMP LARGE.

Les vitrages électrochromes ont typiquement une structure comportant :
- deux couches extérieures transparentes, par exemple deux plaques de verre organique ou minéral,
- deux couches électroconductrices déposées sur les faces internes des couches extérieures et reliées à une alimentation électrique,
- un électrolyte disposé entre les deux couches électroconductrices, au centre dudit dispositif et
- une couche électrochrome disposée entre l'électrolyte et au moins une des couches électroconductrices, et de préférence entre l'électrolyte et les deux couches électroconductrices. Les colorants électrochromes des deux couches électrochromes sont alors choisis de manière à ce que l'un d'eux soit coloré à l'état réduit et incolore ou faiblement coloré à l'état oxydé, tandis que l'autre est coloré à l'état oxydé et incolore ou faiblement coloré à l'état réduit.

Dans un tel dispositif électrochrome contenant deux substances électrochromes, l'une des deux sera à l'état oxydé quand l'autre sera à l'état réduit et inversement. Il est donc nécessaire qu'avant assemblage des différents éléments, une des deux couches électrochromes soit sous forme réduite et l'autre sous forme oxydée.

Le dépôt d'une fine couche d'au moins un composé électrochrome sur un substrat électroconducteur se fait par exemple par électrodéposition ou par voie non-électrolytique selon des techniques connues.

Or, la plupart des revêtements électrochromes déposés ainsi sous forme de couche mince sont à l'état oxydé et doivent par conséquent subir une réduction avant intégration dans un dispositif électrochrome tel que décrit ci-dessus.

Une telle réduction se fait typiquement :
- soit par immersion dans une solution d'un agent réducteur : cette méthode souffre cependant d'une très faible stabilité au stockage de la solution de l'agent réducteur et nécessite une étape supplémentaire de rinçage du film pour éliminer l'agent réducteur résiduel,
- soit dans une cellule électrochimique : la couche électroconductrice portant le revêtement de composé électrochrome à réduire est alors connectée à une première électrode (électrode de travail) et l'ensemble est immergé dans un bain d'électrolyte dans lequel est également plongée une contre-électrode, généralement une contre-électrode sacrificielle contenant un agent réducteur du composé électrochrome et éventuellement une électrode de référence.

Un tel système électrochimique à deux ou trois électrodes est relativement complexe et nécessite une adaptation de la géométrie des différents composants, notamment des dimensions du bain, à la taille de la pièce à traiter. Il est souvent inapproprié, notamment lorsque l'étendue des surfaces à réduire devient très grande, comme c'est le cas par exemple pour des vitres électrochromes, ou lorsque ces surfaces sont courbes. Il ne convient pas non plus très bien pour des procédés de réduction en continu. Par ailleurs avec un tel système électrochimique il est difficile d'obtenir, au-delà d'une certaine étendue du revêtement à réduire, une réduction homogène sur l'ensemble de la surface.

Le but de la présente invention a été de proposer un procédé de réduction de revêtements de composés électrochromes, déposés sur des substrats électroconducteurs (appelés ci-après indifféremment substrats conducteurs, couches électroconductrices ou couches conductrices), qui permettrait à la fois de s'affranchir des problèmes d'adaptation des dimensions de l'appareillage électrochimique à la taille de l'objet à réduire et de permettre l'obtention de revêtements électrochromes réduits de façon homogène sur des étendues importantes. Ce procédé devrait en outre avantageusement pouvoir être mis en oeuvre en mode continu, par exemple sur de longues bandes portant des revêtements électrochromes.

Le procédé mis au point par la Demanderesse permet de résoudre, avec des moyens simples et peu coûteux, l'ensemble de ces problèmes.

Bien que le procédé proposé soit particulièrement utile pour la réduction de composés électrochromes déposés à l'état oxydé, on comprendra facilement à la lecture de la description ci-après qu'il peut s'adapter très facilement à l'oxydation de revêtements qui sont à l'état réduit et l'invention couvre par conséquent ces deux cas, la réduction d'un revêtement de composé électrochrome à l'état oxydé étant simplement un mode de réalisation préféré du procédé de l'invention.

Le principe de fonctionnement du procédé de la présente invention consiste essentiellement à remplacer les deux électrodes du dispositif de réduction électrolytique par une quantité suffisante d'un agent redox (agent réducteur ou agent oxydant) déposé sur le revêtement électrochrome, de préférence en une multitude de points ou de zones de faible étendue.

Dans la demande de brevet français n° 10 54070 ainsi que dans le document WO2011/148081 qui constitue un état de la technique opposable à la présente demande au seul titre de la nouveauté selon l'Article 54(3) CBE, la Demanderesse a décrit un procédé de fabrication d'un article électrochrome où un agent redox est déposé « à coté » du revêtement électrochrome, à savoir sur une zone du substrat électroconducteur non couverte par le revêtement du composé électrochrome. Lorsque l'ensemble formé par le revêtement de composé électrochrome, le substrat électroconducteur et l'agent redox, est ensuite mis en contact avec un électrolyte liquide, une réaction d'oxydoréduction indirecte a lieu, via la couche conductrice sous-jacente, entre l'agent redox et le composé électrochrome déposés sur celle-ci. Le composé électrochrome, en contact avec la surface du substrat conducteur, est réduit ou oxydé de façon homogène même dans les zones où il n'a pas été directement en contact avec l'agent redox. Ce procédé présente l'inconvénient de nécessiter le dépôt du composé sous forme d'un « motif » laissant libre au moins une partie du substrat électroconducteur, destinée à recevoir l'agent redox.

Il serait donc utile de disposer d'un procédé de réduction, ou d'oxydation, similaire à celui décrit dans la demande précitée, mais qui pourrait être mis en oeuvre sur un revêtement électrochrome couvrant toute la surface du substrat conducteur. On comprendra aisément que, pour qu'un tel procédé fonctionne, il est nécessaire que l'agent redox, déposé sur le revêtement électrochrome, soit en contact électrique avec le substrat électroconducteur sous-jacent de manière à garantir un bon transfert des électrons mis en jeu dans la réaction redox. La présente invention est basée sur l'idée qu'un tel contact électrique entre l'agent redox et le substrat conducteur peut être obtenu grâce au choix d'un revêtement électrochrome conducteur électronique et/ou d'un revêtement électrochrome poreux.

La présente invention a par conséquent pour objet un procédé de fabrication d'un article électrochrome comprenant les étapes successives suivantes
(a) le dépôt d'une couche d'un composé électrochrome à la surface d'un substrat électroconducteur transparent ou translucide,
(b) le dépôt d'un agent redox qui est un agent réducteur ou un agent oxydant du composé électrochrome, sur la couche de composé électrochrome en une multitude de zones ou points discrets de celle-ci,
(c) la mise en contact de la couche de composé électrochrome, déposée à l'étape (a), et de l'agent redox, déposé à l'étape (b), avec un électrolyte liquide pendant une durée suffisante pour permettre la réduction ou l'oxydation du composé électrochrome par l'agent redox, et
(d) l'élimination de l'électrolyte par rinçage et/ou séchage,
   la couche de composé électrochrome étant une couche poreuse à porosité ouverte et/ou une couche conductrice électrique.

Le composé déposé à l'étape (a) peut en principe être n'importe quel composé électrochrome. Parmi les composés électrochromes connus, on préfère en particulier ceux pour lesquels un des deux états de coloration est un état sensiblement incolore.

On peut citer à titre d'exemples de tels composés électrochromes, les hexacyanométallates tels que les hexacyanoferrates de fer (par exemple le bleu de prusse), de vanadium, de ruthénium, de cadmium, de chrome, de palladium ou de platine, le WO₃, le V₂O₅, et le NiO. On peut également utiliser des polymères électrochrome tels que le poly(3,4-éthylènedioxythiophène) (PEDOT) qui est essentiellement transparent et incolore à l'état oxydé et de couleur bleue à l'état réduit. Enfin, si les viologènes tels que les alkylviologènes, arylviologènes ou alkylarylviologènes ne conviennent pas très bien en tant que tels, leurs polymères, les polyviologènes, forment des couches électrochromes de bonne qualité.

On peut citer, en tant que composés électrochromes préférés, les hexacyanométallates, en particulier les hexacyanométallates de fer tel que le Bleu de Prusse, et les polymères conducteurs, en particulier le PEDOT

La liste des colorants électrochromes ci-dessus n'a toutefois aucun caractère limitatif et le procédé de la présente invention pourra s'adapter en principe à n'importe quel composé électrochrome ne figurant pas dans cette liste, à condition qu'il présente une adhérence suffisante au substrat conducteur sous-jacent, qu'il soit insoluble dans l'électrolyte liquide et qu'on dispose d'un agent redox approprié.

A l'étape (a) du procédé selon l'invention, le composé électrochrome est déposé sous forme d'un revêtement mince à la surface d'un substrat électroconducteur transparent.

Ce revêtement électrochrome doit être poreux avec une porosité ouverte suffisante pour permettre la perméation de l'agent redox jusqu'au substrat électroconducteur, et/ou avoir une conductivité électronique.

Certains des composés électrochromes, par exemple le PEDOT, donnent spontanément naissance à un revêtement poreux. Pour d'autres, en particulier les composés électrochromes minéraux, il est nécessaire d'incorporer dans le revêtement des agents porogènes connus qui peuvent être éliminés du revêtement fini par exemple par lavage ou chauffage. L'utilisation d'agents porogènes est particulièrement aisée pour des dépôts faits par voie humide( par exemple par spin coating, enduction, impression par jet d'encre). Certaines techniques de dépôt par voie gazeuse telles que le dépôt chimique en phase vapeur (CVD, de l'anglais *chemical vapor deposition*) éventuellement assisté par plasma, ou le dépôt physique en phase vapeur (PVD, de l'anglais *plysical vapor deposition*) éventuellement assisté par plasma permettent l'obtention de revêtements électrochromes poreux sans utilisation d'agents porogènes.

On peut citer à titre d'exemples d'agents porogènes les agents tensioactifs cationiques tels que les agents tensioactifs à groupement ammonium quaternaire ou les agents tensio-actifs non ioniques tels que des polymères à blocs avec des séquences hydrophiles et hydrophobes dont les propriétés tensioactives aboutissent à une nanostructuration des revêtements. Les copolymères séquencés à base d'oxyde d'éthylène et d'oxyde de propylène commercialisés sous la dénomination Pluronic^{®} sont parfaitement appropriés pour la création de canaux nanométriques à l'intérieur des revêtements électrochromes.

Certains des composés électrochromes énumérés ci-dessus ont une conductivité intrinsèque. C'est le cas par exemple du PEDOT et des polyviologènes qui sont des polymères conducteurs et du WO₃ qui est un semi-conducteur inorganique. Lorsqu'on souhaite utiliser des composés électrochromes qui ne sont pas conducteurs électroniques, il est bien entendu nécessaire d'incorporer dans le revêtement électrochrome un agent susceptible de lui conférer une certaine conductivité. On utilisera de préférence les matériaux conducteurs transparents décrits ci-dessous utilisés pour le substrat électroconducteur sous-jacent. Ces matériaux conducteurs sont incorporés dans le revêtement électrochrome en des proportions comprises entre 1 et 20 % en poids, de préférence à raison de 2 à 10 % en poids, rapporté au poids total du revêtement électrochrome.

L'épaisseur du revêtement électrochrome ne dépasse généralement pas 10 micromètres et est de préférence comprise entre 100 et 1000 nm.

On connaît dans la technique un certain nombre de matériaux conducteurs transparents organiques ou minéraux. Les matériaux minéraux les plus largement utilisés sont les oxydes conducteurs transparents connus sous l'abréviation TCO (de l'anglais *transparent conductive oxides*) parmi lesquels on peut citer les dérivés de l'oxyde d'étain, de l'oxyde d'indium et de l'oxyde de zinc. On peut citer en particulier l'oxyde d'étain dopé au fluor (FTO, *fluor tin oxide*), l'oxyde d'indium dopé à l'étain (ITO, *indium tin oxide*), l'oxyde d'étain dopé à l'antimoine et l'oxyde de zinc dopé à l'aluminium. L'oxyde d'indium dopé à l'étain (ITO) est particulièrement préféré.

On peut également utiliser des polymères organiques électroconducteurs tels que les poly(acétylène), polypyrroles, polythiophènes, polyanilines, poly(p-phénylène sulfure), poly(p-phénylène vinylène). Un polymère électroconducteur transparent bien connu est le poly(3,4-éthylènedioxythiophène) (PEDOT).

Le substrat électroconducteur est généralement une couche électroconductrice transparente ou translucide formée sur un support non conducteur. Cette couche a alors de préférence une épaisseur comprise entre 50 nm et 10 000 nm, en particulier entre 100 et 600 nm.

Le support non conducteur est bien entendu de préférence également transparent ou translucide.

Il peut s'agir d'un substrat en verre minéral ou bien d'un matériau organique transparent, par exemple en poly(éthylène téréphtalate), polycarbonate, polyamide, polyimide, polysulfones, poly(méthacrylate de méthyle), copolymères d'éthylène téréphtalate et de carbonate, polyoléfines, notamment polynorbornènes, homopolymères et copolymères de diéthylèneglycol bis(allylcarbonate), homopolymères et copolymères (méth)acryliques, notamment les homopolymères et copolymères (méth)acryliques dérivés de bisphenol-A, homopolymères et copolymères thio(méth)acryliques, homopolymères et copolymères d'uréthane et de thiouréthane, homopolymères et copolymères époxyde et homopolymères et copolymères épisulfide.

Le support non conducteur peut en particulier être un matériau relativement flexible, par exemple un polymère, plastifié ou non, ayant de préférence une température de transition vitreuse supérieure à 60 °C, permettant le dépôt du composé électrochrome par impression rotative et la réduction ou l'oxydation en continu du matériau électrochrome selon le procédé de la présente invention.

Le composé électrochrome est déposé au moins sur une partie de la surface, de préférence sur toute la surface du support électroconducteur.

Comme indiqué en introduction, l'agent redox est de préférence un agent réducteur. La nature de l'agent réducteur n'est pas déterminante pour la présente invention à condition que cet agent réducteur soit suffisamment insoluble dans l'électrolyte liquide pour ne pas être éliminé de la surface du substrat électroconducteur avant d'avoir rempli sa fonction consistant à réduire le colorant électrochrome. On peut citer à titre d'exemple d'agents réducteurs utilisables, le nickel (Ni), le molybdène (Mo), le cuivre (Cu), le cobalt (Co), l'indium (In), le fer (Fe), le zinc (Zn), le silicium (Si), l'argent (Ag), le titane (Ti), l'aluminium (Al), tous ces métaux étant de préférence à l'état métallique. On utilisera de préférence Cu, Ni, Ag, Ti et Al.

L'agent redox est de préférence déposé en une multitude de points ou de zones sur la couche de composé électrochrome. Ces points ou zones peuvent être déposés au hasard, mais sont de préférence disposées de façon ordonnée, à une distance régulière les uns des autres. Il peut s'agir par exemple d'un ensemble de lignes fines ou de points, d'un quadrillage, d'un alignement régulier de motifs etc.

Lorsque l'agent redox, après avoir cédé ou accepté des électrons, devient soluble dans l'électrolyte liquide et est éliminé de la surface de la couche électrochrome, la taille et la disposition des points ou zones a bien entendu peu d'importance. Par contre, lorsque l'agent redox ne se solubilise pas mais reste sur la couche électrochrome après avoir réagi, il est généralement préférable qu'il soit peu ou pas visible à l'oeil nu. De préférence, le rapport de la surface couverte par l'agent redox à la surface totale de la couche électrochrome est inférieur à 5 %, en particulier inférieur à 3 % et en particulier inférieur à 1 %.

On peut également envisager le dépôt de l'agent redox dans une zone qui sera ensuite découpée et absente de l'article fini. Dans ce cas, la géométrie du dépôt a pour des raisons évidentes, beaucoup moins d'importance.

La quantité d'agent redox à déposer dépend bien entendu de l'étendue mais également de l'épaisseur du revêtement électrochrome qu'il s'agit de réduire. L'agent réducteur fonctionne en effet comme un «réservoir» d'électrons disponibles, via le substrat électroconducteur, pour la réduction du colorant électrochrome. L'homme du métier saura déterminer sans problème la quantité nécessaire pour obtenir la réduction souhaitée du revêtement électrochrome.

Lorsque la couche électrochrome est une couche à porosité ouverte, l'agent redox est déposé d'une manière qui permet sa pénétration dans le réseau poreux et le contact direct avec le support électroconducteur sous-jacent. On utilisera par exemple une dispersion très peu visqueuse de particules métalliques très fines dans un solvant approprié. La taille moyenne des particules devra bien entendu être significativement inférieure au diamètre moyen des pores du revêtement électrochrome soit être comprise entre 5 nm et 500 nm. Le solvant est de préférence éliminé par évaporation avant mise en oeuvre de l'étape suivante.

Après accomplissement des étapes (a) et (b), le substrat portant le revêtement électrochrome et l'agent redox déposé sur le revêtement électrochrome est mis en contact avec l'électrolyte liquide, de préférence par immersion ou par pulvérisation avec l'électrolyte liquide.

L'électrolyte liquide peut être une solution aqueuse ou non aqueuse, contenant généralement mais pas systématiquement un sel. Les solvants non aqueux utilisés peuvent être des solvants organiques tels que le carbonate de propylène, le carbonate d'éthylène ou le diméthylsulfoxide, ou encore des liquides ioniques. On peut citer en tant que sels utilisables, par exemple le perchlorate de lithium, le perchlorate de tétrabutylammonium, et le chlorure de potassium.

La mise en contact avec l'électrolyte liquide peut se faire à température ambiante, c'est-à-dire à une température comprise entre 15 et 25 °C, ou bien à des températures plus élevées qui ne seront limitées en principe que par la dégradation thermique du système.

La durée de la mise en contact dépend d'un certain nombre de facteurs tels que la température de l'électrolyte, l'épaisseur de la couche électrochrome, la conductivité de la couche conductrice, l'étendue de la surface à réduire ainsi que la vitesse de la réaction redox. La Demanderesse a constaté que pour des épaisseurs de couche électrochrome telles qu'indiquées ci-dessus, une durée de mise en contact comprise entre 30 secondes et 15 minutes, de préférence entre 1 minute et 8 minutes, est généralement suffisante.

### Exemple

On dépose sur un support transparent en poly(éthylène téréphtalate) comportant un revêtement en d'oxyde d'indium dopé à l'étain (ITO) d'une épaisseur de 250 nm, une couche de PEDOT d'environ 200 nm d'épaisseur sur une surface de 4 cm². Après dispersion de nanoparticules de cuivre dans l'éthanol (3 % en masse de Cu rapporté au mélange), une goutte de la dispersion est déposée sur le PEDOT sur une surface d'environ 0.5 cm² et l'éthanol est évaporé par chauffage à 70°C pendant 20 minutes. L'ensemble est ensuite immergé dans une solution de perchlorate de tetrabutylammonium (TBAClO₄) dans du carbonate de propylène (1M). Le dépôt de PEDOT adopte alors, sur toute son étendue, une coloration bleue qui n'évolue plus après environ 1 minute. L'article électrochrome ainsi obtenu est finalement retiré de la solution, rincé et séché.

## Revendications

1. Procédé de fabrication d'un article électrochrome comprenant les étapes successives suivantes
(a) le dépôt d'une couche d'un composé électrochrome à la surface d'un substrat électroconducteur transparent ou translucide,
(b) le dépôt d'un agent redox qui est un agent réducteur ou un agent oxydant du composé électrochrome, sur la couche de composé électrochrome en une multitude de zones ou points discrets de celle-ci,
(c) la mise en contact de la couche de composé électrochrome, déposée à l'étape (a), et de l'agent redox, déposé à l'étape (b), avec un électrolyte liquide pendant une durée suffisante pour permettre la réduction ou l'oxydation du composé électrochrome par l'agent redox, et
(d) l'élimination de l'électrolyte par rinçage et/ou séchage,
la couche de composé électrochrome étant une couche poreuse à porosité ouverte et/ou une couche conductrice électrique.

2. Procédé selon la revendication 1, **caractérisé par le fait que** l'agent redox est déposé en une multitude de points ou de zones sur la couche de composé électrochrome.

3. Procédé selon la revendication 1 ou 2, **caractérisé par le fait que** le rapport de la surface couverte par l'agent redox à la surface totale de la couche électrochrome est inférieur à 5 %, de préférence inférieur à 3 % et en particulier inférieur à 1 %.

4. Procédé selon l'une quelconque des revendications précédentes, **caractérisé par le fait que** l'agent redox est un agent réducteur du composé électrochrome.

5. Procédé selon l'une quelconque des revendications précédentes, **caractérisé par le fait que** le substrat électroconducteur est constitué d'oxyde d'indium dopé à l'étain (ITO), d'oxyde d'étain dopé au fluor (FTO) ou de polymères organiques conducteurs.

6. Procédé selon l'une quelconque des revendications précédentes, **caractérisé par le fait que** l'agent réducteur est choisi dans le groupe formé par Ni, Mo, Cu, Co, In, Fe, Zn, Si, Ag, Ti, Al, de préférence parmi Cu, Ni, Ag, Ti et Al, tous ces métaux étant à l'état métallique.

7. Procédé selon l'une quelconque des revendications précédentes, **caractérisé par le fait que** le composé électrochrome est choisi parmi les hexacyanométallates, de préférence les hexamétallates de fer, en particulier le Bleu de Prusse, et les polymères conducteurs, de préférence le PEDOT

8. Procédé selon l'une quelconque des revendications précédentes, **caractérisé par le fait que** la mise en contact à l'étape (c) se fait par immersion dans l'électrolyte liquide ou par pulvérisation de l'électrolyte liquide.

9. Procédé selon l'une quelconque des revendications précédentes, **caractérisé par le fait que** la durée de mise en contact, à l'étape (c), est comprise entre 30 secondes et 15 minutes, de préférence entre 1 minute et 8 minutes.

## Patentansprüche

1. Verfahren zur Herstellung eines elektrochromen Artikels, das folgende Schritte umfasst:
(a) Abscheiden einer Schicht aus einer elektrochromen Verbindung auf der Oberfläche eines transparenten oder durchscheinenden elektrisch leitfähigen Substrats,
(b) Abscheiden eines Redoxmittels, bei dem es sich um ein Reduktionsmittel oder ein Oxidationsmittel für die elektrochrome Verbindung handelt, auf der Schicht aus elektrochromer Verbindung in einer Vielzahl von diskreten Zonen oder Punkten der Schicht;
(c) Inberührungbringen der in Schritt (a) abgeschiedenen Schicht aus elektrochromer Verbindung und des in Schritt (b) abgeschiedenen Redoxmittels mit einem flüssigen Elektrolyten über einen für die Reduktion oder Oxidation der elektrochromen Verbindung durch das Redoxmittel ausreichenden Zeitraum; und
(d) Entfernen des Elektrolyten durch Spülen und/oder Trocknen,
wobei es sich bei der Schicht aus elektrochromer Verbindung um eine poröse Schicht mit offener Porosität und/oder eine elektrisch leitfähige Schicht handelt.

2. Verfahren nach Anspruch 1, **dadurch gekennzeichnet, dass** das Redoxmittel in einer Vielzahl von Punkten oder Zonen auf der Schicht aus elektrochromer Verbindung abgeschieden wird.

3. Verfahren nach Anspruch 1 oder 2, **dadurch gekennzeichnet, dass** das Verhältnis von durch das Redoxmittel bedeckter Oberfläche zu Gesamtoberfläche der elektrochromen Schicht weniger als 5%, vorzugsweise weniger als 3% und insbesondere weniger als 1% beträgt.

4. Verfahren nach einem der vorhergehenden Ansprüche, **dadurch gekennzeichnet, dass** es sich bei dem Redoxmittel um ein Reduktionsmittel für die elektrochrome Verbindung handelt.

5. Verfahren nach einem der vorhergehenden Ansprüche, **dadurch gekennzeichnet, dass** das elektrisch leitfähige Substrat aus zinndotiertem Indiumoxid (ITO), Fluordotiertem Zinnoxid (FTO) oder leitfähigen organischen Polymeren besteht.

6. Verfahren nach einem der vorhergehenden Ansprüche, **dadurch gekennzeichnet, dass** man das Reduktionsmittel aus der Gruppe bestehend aus Ni, Mo, Cu, Co, In, Fe, Zn, Si, Ag, Ti und Al und vorzugsweise aus Cu, Ni, Ag, Ti und Al auswählt, wobei alle diese Metalle in metallischem Zustand vorliegen.

7. Verfahren nach einem der vorhergehenden Ansprüche, **dadurch gekennzeichnet, dass** man die elektrochrome Verbindung aus Hexacyanometallaten, vorzugsweise Hexametallaten von Eisen, insbesondere Berliner Blau, und leitfähigen Polymeren, vorzugsweise PEDOT, auswählt.

8. Verfahren nach einem der vorhergehenden Ansprüche, **dadurch gekennzeichnet, dass** das Inberührungbringen in Schritt (c) durch Eintauchen in den flüssigen Elektrolyten oder durch Aufsprühen des flüssigen Elektrolyten erfolgt.

9. Verfahren nach einem der vorhergehenden Ansprüche, **dadurch gekennzeichnet, dass** der Zeitraum des Inberührungbringens in Schritt (c) zwischen 30 Sekunden und 15 Minuten, vorzugsweise zwischen 1 Minute und 8 Minuten, liegt.

## Claims

1. Process for manufacturing an electrochromic article comprising the following successive steps:
(a) the deposition of a layer of an electrochromic compound on the surface of a transparent or translucent electrically conductive substrate,
(b) the deposition of a redox agent which is a reducing agent or an oxidizing agent for the electrochromic compound, on the layer of electrochromic compound in a multitude of discrete regions or points of said layer,
(c) the contacting of the layer of electrochromic compound, deposited in step (a), and of the redox agent, deposited in step (b), with a liquid electrolyte for a sufficient time to enable the reduction or the oxidation of the electrochromic compound by the redox agent, and
(d) the removal of the electrolyte by rinsing and/or drying,
the layer of electrochromic compound being a porous layer with open porosity and/or an electrically conductive layer.

2. Process according to Claim 1, **characterized in that** the redox agent is deposited in a multitude of points or regions on the layer of electrochromic compound.

3. Process according to Claim 1 or 2, **characterized in that** the ratio of the surface area covered by the redox agent to the total surface area of the electrochromic layer is less than 5%, preferably less than 3% and in particular less than 1%.

4. Process according to any of the preceding claims, **characterized in that** the redox agent is a reducing agent for the electrochromic compound.

5. Process according to any of the preceding claims, **characterized in that** the electrically conductive substrate consists of tin-doped indium oxide (ITO), fluorine doped tin oxide (FTO) or conductive organic polymers.

6. Process according to any one of the preceding claims, **characterized in that** the reducing agent is chosen from the group formed by Ni, Mo, Cu, Co, In, Fe, Zn, Si, Ag, Ti, Al, preferably from Cu, Ni, Ag, Ti and Al, all these metals being in the metallic state.

7. Process according to any one of the preceding claims, **characterized in that** the electrochromic compound is chosen from hexacyanometallates, preferably hexametallates of iron, in particular Prussian blue, and conductive polymers, preferably PEDOT.

8. Process according to any one of the preceding claims, **characterized in that** the contacting in step (c) is carried out by immersion in the liquid electrolyte or by spraying of the liquid electrolyte.

9. Process according to any one of the preceding claims, **characterized in that** the contacting time, in step (c), is between 30 seconds and 15 minutes, preferably between 1 minute and 8 minutes.
